# EUROPEAN PATENT APPLICATION

(11) **EP 4 432 151 A1**
(43) Date of publication of application: **18.09.2024**
(21) Application number: 22906055.3
(22) Date of filing: 18.10.2022
(51) Int. Cl.: G06F 30/12, G06F 30/13

(54) **ONLINE COLLABORATIVE EDITING METHOD AND APPARATUS, ELECTRONIC DEVICE AND STORAGE MEDIUM**

(30) Priority: 15.12.2021 CN 202111539521
(71) Applicant: Shenzhen Xumi Yuntu Space Technology Co., Ltd., Shenzhen, Guangdong 518054 (CN)
(72) Inventor: TIAN, Ye, Shenzhen, Guangdong 518054 (CN); WANG, Qiang, Shenzhen, Guangdong 518054 (CN); ZHAI, Ming, Shenzhen, Guangdong 518054 (CN); KANG, Sidi, Shenzhen, Guangdong 518054 (CN); REN, Yuan, Shenzhen, Guangdong 518054 (CN)
(74) Representative: Bayramoglu et al.
(86) International application number: PCT/CN2022/126023
(87) International publication number: WO 2023/109303

(57) **Abstract**

An online collaborative editing method and apparatus, an electronic device, and a storage medium. The method comprises: acquiring an imported building information model, converting the building information model into an original model file which meets a predetermined lightweight engine requirement, and displaying, in a webpage, a building plan corresponding to the original model file (S101); receiving a first model log file uploaded by a first user and a second model log file uploaded by a second user, wherein the first model log file is obtained by the first user editing the building plan online, and the second model log file is obtained by the second user editing the building plan online (S 102); determining a latest effective date on the basis of a first effective date of the first model log file and a second effective date of the second model log file (S103); and when it is determined that the first effective date is the latest effective date, updating the original model file on the basis of the first model log file to obtain an intermediate model file, and updating the intermediate model file on the basis of the second model log file to obtain a target model file (S104). The method can realize online collaborative editing of the building plan between different users.

## Description

### TECHNICAL FIELD

The present disclosure relates to the field of building design technologies, and in particular, to an online collaborative editing method and apparatus, an electronic device, and a computer-readable storage medium.

### BACKGROUND

Building Information Modeling (BIM) is a novel computer application technology in engineering construction industry, and by designing and using relevant information data of a building engineering project as a model basis, and sharing and transferring the data in the whole life cycle process of stages of planning, designing, constructing, operation managing, of the like, of the construction project, engineering technicians can correctly understand and efficiently deal with various kinds of building information, a foundation for cooperative work is provided for design teams, construction organizations and all construction subjects including building operation organizations, and an important role is played in improving a production efficiency, saving a cost and shortening a construction period.

Autodesk Computer Aided Design (AutoCad) is automatic computer aided design software developed by Autodesk, is used for two-dimensional drawing, detailed drawing, document designing and basic three-dimensional designing, and becomes a drawing tool widely popularized internationally.

In the prior art, when contours and attributes of shops in a shopping mall are required to be adjusted, or the shops are required to be split and combined, shop maintenance persons of the shopping mall are required to ask professional engineering technicians to perform customized designing or modification on a building plan by using the AutoCAD software, so as to meet personalized requirements of different users. However, in practical applications, since the adjustment and the modification of the drawing require high professional skills, untrained persons cannot adjust and modify the drawing, resulting in a long adjustment and modification period of the drawing. In addition, for the adjustment and modification of a plurality of shops, generally, another shop is adjusted and modified after one shop is adjusted and modified; that is, the plurality of shops cannot be adjusted and modified at the same time, resulting in a low plotting efficiency; further, since the plurality of shops have drawings of a plurality of adjustment and modification versions, the plural adjusted and modified drawings are required to be manually merged into a same drawing, which is error-prone and consumes a lot of manpower and time costs.

### SUMMARY

In view of this, embodiments of the present disclosure provide an online collaborative editing method and apparatus, an electronic device, and a computer-readable storage medium, so as to solve the problems in the prior art that a drawing adjustment and modification period is long, a plotting efficiency is low, an error is prone to occur, and a lot of manpower and time costs are consumed.

In a first aspect of the embodiments of the present disclosure, there is provided an online collaborative editing method, including: acquiring an imported building information model, converting the building information model into an original model file which meets a predetermined lightweight engine requirement, and displaying, in a webpage, a building plan corresponding to the original model file; receiving a first model log file uploaded by a first user and a second model log file uploaded by a second user, wherein the first model log file is obtained by the first user editing the building plan online, and the second model log file is obtained by the second user editing the building plan online; determining a latest effective date of a first effective date corresponding to the first model log file and a second effective date corresponding to the second model log file on the basis of the first effective date and the second effective date; and when it is determined that the first effective date is the latest effective date, updating the original model file on the basis of the first model log file to obtain an intermediate model file, and updating the intermediate model file on the basis of the second model log file to obtain a target model file.

In a second aspect of the embodiments of the present disclosure, there is provided an online collaborative editing apparatus, including: an acquiring module configured to acquire an imported building information model, convert the building information model into an original model file which meets a predetermined lightweight engine requirement, and display, in a webpage, a building plan corresponding to the original model file; a receiving module configured to receive a first model log file uploaded by a first user and a second model log file uploaded by a second user, wherein the first model log file is obtained by the first user editing the building plan online, and the second model log file is obtained by the second user editing the building plan online; a determining module configured to determine a latest effective date of a first effective date corresponding to the first model log file and a second effective date corresponding to the second model log file on the basis of the first effective date and the second effective date; and an updating module configured to, when it is determined that the first effective date is the latest effective date, update the original model file on the basis of the first model log file to obtain an intermediate model file, and update the intermediate model file on the basis of the second model log file to obtain a target model file.

In a third aspect of the embodiments of the present disclosure, there is provided an electronic device, including a memory, a processor and a computer program stored in the memory and runnable on the processor, wherein the processor, when executing the computer program, implements the steps of the above method.

In a fourth aspect of the embodiments of the present disclosure, there is provided a computer-readable storage medium storing a computer program, wherein the computer program, when executed by a processor, implements the steps of the above method.

Compared with the prior art, the embodiments of the present disclosure have the following beneficial effects: by acquiring the imported building information model, converting the building information model into the original model file which meets the predetermined lightweight engine requirement, and displaying, in the webpage, the building plan corresponding to the original model file; receiving the first model log file uploaded by the first user and the second model log file uploaded by the second user, wherein the first model log file is obtained by the first user editing the building plan online, and the second model log file is obtained by the second user editing the building plan online; determining the latest effective date of the first effective date corresponding to the first model log file and the second effective date corresponding to the second model log file on the basis of the first effective date and the second effective date; and when it is determined that the first effective date is the latest effective date, updating the original model file on the basis of the first model log file to obtain the intermediate model file, and updating the intermediate model file on the basis of the second model log file to obtain the target model file, different users can simultaneously carry out online collaborative editing on the building plan on the webpage, thereby optimizing an editing process, improving an editing efficiency, shortening the adjustment and modification period, improving the plotting efficiency, reducing an error rate, saving the lot of manpower and time costs, and further improving user experiences.

### BRIEF DESCRIPTION OF THE DRAWINGS

In order to more clearly illustrate the technical solutions in the embodiments of the present disclosure, the accompanying drawings used in the description of the embodiments or the prior art will be briefly introduced below. It is apparent that, the accompanying drawings in the following description are only some embodiments of the present disclosure, and other drawings can be obtained by those of ordinary skill in the art from the provided drawings without creative efforts.
FIG. 1 is a schematic flowchart of an online collaborative editing method according to an embodiment of the present disclosure;
FIG. 2a is a schematic diagram of a building plan displayed on a browser during conflict generation in an embodiment of the present disclosure;
FIG. 2b is a schematic diagram of an example involved in a practical application scenario in an embodiment of the present disclosure;
FIG. 3 is a schematic structural diagram of an online collaborative editing apparatus according to an embodiment of the present disclosure; and
FIG. 4 is a schematic structural diagram of an electronic device according to an embodiment of the present disclosure.

### DETAILED DESCRIPTION OF THE EMBODIMENTS

In the following description, for the purpose of illustration instead of limitation, specific details such as a particular system structure and a technology are provided to make the embodiments of the present disclosure understood thoroughly. However, it should be understood by those skilled in the art that the present disclosure can also be implemented in other embodiments without the specific details. In other cases, detailed description of well-known systems, apparatuses, circuits and methods is omitted, so that the present disclosure is described without being impeded by unnecessary details.

Furthermore, those of ordinary skill in the art should appreciate that the drawings provided herein are for illustrative purposes and are not necessarily drawn to scale.

Unless expressly required in the context, the words "include", "comprise", or the like, throughout the specification and claims should be interpreted as inclusive and not exclusive or exhaustive; in other words, it has the meaning of "including but not limited to".

In the description of the present disclosure, it is to be understood that the terms "first", "second", or the like, are used for descriptive purposes only and are not intended to indicate or imply relative importance. Furthermore, in the description of the present disclosure, "a plurality of" means two or more unless otherwise specified.

In the field of building construction, a building plan is a drawing composed of corresponding legends using a horizontal projection method for building conditions, such as walls, doors, windows, stairs, floors and internal functional layouts of a newly-built building or structure. As an important component in building design and construction drawings, the building plan reflects conditions of a plane shape, a size, an internal layout, a floor, specific positions of doors and windows, a floor area, or the like, of the building, is an important basis for construction and construction site arrangement of the newly-built building, and is also a basis for designing and planning professional engineering plans for water supply and drainage, strong and weak electricity, heating and ventilation devices, or the like, and drawing a pipeline comprehensive drawing. The building plans can be divided into building construction drawings, structural construction drawings and device construction drawings. House building plans for construction typically include a ground floor plan, a standard floor plan, a top floor plan and a roof plan.

Taking shops in a shopping mall as an example, when contours and attributes of the shops are required to be adjusted, or the shops are required to be split and combined, each process may involve adjustment and modification of the drawing, the adjustment and modification of the drawing are usually required to be manually performed by an engineering technician on professional drawing software (for example, AutoCAD, SketchUp, 3D Studio Max), and therefore, a lot of manpower and time costs are required to be consumed; further, since the drawing is drawn manually, a drawing speed of the drawing is low, and quality of the drawing is difficult to ensure. Furthermore, for the adjustment and modification of a plurality of shops, generally, another shop is adjusted and modified after one shop is adjusted and modified; that is, the plurality of shops cannot be adjusted and modified at the same time, resulting in a low plotting efficiency; since the plurality of shops have drawings of a plurality of adjustment and modification versions, the plural adjusted and modified drawings are required to be manually merged into a same drawing, which is error-prone and consumes a lot of manpower and time costs; further, since the adjustment and modification of the drawing is completed offline based on paper drawings, the problems of missing, disorder, damage, or the like, of the adjusted and modified drawings are prone to occur.

Therefore, a current drawing adjusting and modifying method mainly depends on manual operations of the engineering technicians, and although some products capable of directly analyzing CAD drawings by graphic engines exist in the market, the products cannot analyze three-dimensional models and cannot meet the requirement of online collaborative editing of the engineering technicians. Therefore, it is necessary to provide a solution in which online collaborative editing can be performed on the two-dimensional drawing or the three-dimensional model based on the graphic engine, so as to optimize an editing process, improve an editing efficiency, shorten an adjustment and modification period, improve a plotting efficiency, reduce an error rate, save a lot of manpower and time costs, and further improve user experiences.

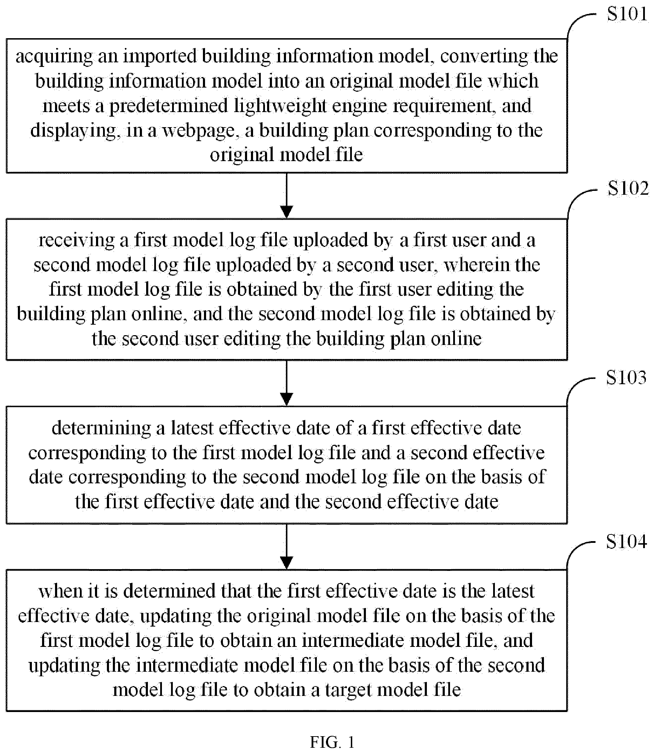

FIG. 1 is a schematic flowchart of an online collaborative editing method according to an embodiment of the present disclosure. The online collaborative editing method of FIG. 1 may be performed by a server or a terminal device. As shown in FIG. 1, the online collaborative editing method includes:
S101: acquiring an imported building information model, converting the building information model into an original model file which meets a predetermined lightweight engine requirement, and displaying, in a webpage, a building plan corresponding to the original model file;
S102: receiving a first model log file uploaded by a first user and a second model log file uploaded by a second user, wherein the first model log file is obtained by the first user editing the building plan online, and the second model log file is obtained by the second user editing the building plan online;
S103: determining a latest effective date of a first effective date corresponding to the first model log file and a second effective date corresponding to the second model log file on the basis of the first effective date and the second effective date; and
S104: when it is determined that the first effective date is the latest effective date, updating the original model file on the basis of the first model log file to obtain an intermediate model file, and updating the intermediate model file on the basis of the second model log file to obtain a target model file.

Specifically, taking a server as an example, after acquiring the imported building information model, the server converts the building information model into the original model file which meets the predetermined lightweight engine requirement, and displays, in the webpage, the building plan corresponding to the original model file; after receiving the first model log file obtained by the first user editing the building plan online and the second model log file obtained by the second user editing the building plan online, the server acquires the first effective date corresponding to the first model log file and the second effective date corresponding to the second model log file, and determines one of the first effective date and the second effective date closest to a current date as the latest effective date; further, when it is determined that the first effective date is the latest effective date, the server updates the original model file on the basis of the first model log file to obtain the intermediate model file, and updates the intermediate model file on the basis of the second model log file to obtain the target model file.

Here, the server may be a server providing various services, for example, a background server receiving a request sent by a terminal device establishing communication connection with the server, and the background server may receive and analyze the request sent by the terminal device, and generate a processing result. The server may be a server, or a server cluster composed of a plurality of servers, or a cloud computing service center, which is not limited in the embodiment of the present disclosure.

Further, the server may be hardware or software. When the server is hardware, the server may be various electronic devices providing various services for the terminal device. When the server is software, the server may be plural pieces of software or software modules providing various services for the terminal device, or may be a single piece of software or software module providing various services for the terminal device, which is not limited in the embodiment of the present disclosure. It should be noted that a specific type, a number, and a combination of the server may be adjusted according to actual needs of the application scenario, which is not limited in the embodiment of the present disclosure.

The terminal device may be hardware or software. When the terminal device is hardware, the terminal device may be various electronic devices having a display screen and supporting communication with the server, including but not limited to smart phones, tablet computers, laptop portable computers, desktop computers, or the like; when the terminal device is software, the terminal device may be installed in the electronic device as described above. The terminal device may be implemented as a plurality of pieces of software or software modules, or may be implemented as a single piece of software or software module, which is not limited in the embodiment of the present disclosure.

A model is a formal expression mode obtained by abstracting a certain actual problem or objective object and rule, and generally includes three parts: a target, a variable and a relationship. The model may include, but is not limited to, a mathematical model, a program model, a logical model, a structural model, a method model, an analytical model, a management model, a data model, a system model, or the like. In the embodiment of the present disclosure, the model may be the building information model which is an engineering data model integrating various related information of a building engineering project based on a three-dimensional digital technology, and simulates real information of a building through digital information simulation. In BIM, Revit is a mainstream BIM visualization and modeling tool, and therefore, the building information model in the embodiment of the present disclosure may be a Revit model.

Further, the original model file is obtained by converting the building information model and capable of being recognized and loaded by a lightweight engine. The intermediate model file is obtained by updating the original model file, and the target model file is obtained by updating the intermediate model file.

The lightweight engine is configured to carry out lightweight conversion on the building information model, and load and use a lightweight model. Here, the lightweight conversion indicates that the building information model is converted into primitive data and model structured data by the lightweight engine, and the primitive data is stored in the form of an original file; the model structured data is saved in a corresponding relational database in the form of data records to facilitate later retrieval and utilization of the data. The lightweight model is loaded and used by displaying the lightweight building information model in the webpage by using a Web Graphics Library (WebGL) technology, and displayed functions include a building information model control function, a model member attribute customization function, a building information model-based labeling and displaying function, or the like.

Further, WebGL is a three-dimensional (3D) drawing protocol which allows JavaScript and OpenGL ES 2.0 to be combined together, and by adding JavaScript binding of OpenGL ES 2.0, WebGL can provide hardware 3D accelerated rendering for HTML5 Canvas, such that Web developers can not only more smoothly display 3D scenarios and models in browsers by means of system display cards, but also can create complex navigation and data visualization. Therefore, the WebGL technical standard avoids the trouble of developing a webpage dedicated rendering plug-in, can be used for creating a website page with a complex 3D structure, and even can be used for designing a 3D webpage game, or the like.

The webpage (also called web page) is a basic element constituting a website, and is a platform for carrying various website applications. The webpage is required to be read by a web browser. In the embodiment of the present disclosure, the original model file is loaded by using the web browser, such that the building plan corresponding to the original model file is displayed by using the page, thereby facilitating an online editing operation of the building plan. Here, the editing operation may include one or more of a dividing operation, a merging operation, a deleting operation, a translating operation, a rotating operation, a copying operation, a multi-line editing operation, a node editing operation, an operation of converting a line segment into an arc, a chamfering operation, a label adding operation, and a label deleting operation.

A drawing is a technical document for describing structures, shapes, sizes and other requirements of engineering buildings, machines, devices, or the like, by using graphs and characters with marked sizes; that is, the drawing is a pictorial representation marked with construction details, such as sizes, orientations, technical parameters, or the like, and engineering real objects which an owner wishes to construct. The drawing may be a drawing of work included in a contract, or an added or modified drawing signed and issued by the owner (or a representative thereof) according to the contract. The drawing may be a building drawing, including but not limited to a building sectional drawing, a building plan, a general building plan, a building engineering construction drawing, a building construction drawing, a building engineering drawing, or the like. Preferably, in the embodiment of the present disclosure, the drawing is a building plan used to show a plane form, size, room arrangement, building population and hall and stair arrangement of a building, and indicate positions, thicknesses and materials of walls and columns, types and positions of doors and windows, or the like.

The log file is a recording file or a file set for recording system operation events, can be divided into an event log and a message log, and has important functions of processing historical data, tracking diagnosis problems, understanding system activities, or the like. Here, the event log records events occurring in system execution, in order to provide understanding of the system activities and tracking of the diagnosis problems. The message log is an internet relay chat (IRC) instant messaging (IM) program, and peer-to-peer file sharing clients with a chat function and multiplayer games (particularly MMORPG) usually have the capability of automatically recording (i.e., saving) text communication. In the embodiment of the present disclosure, the first model log file is obtained by the first user editing the building plan online, and the second model log file is obtained by the second user editing the building plan online.

The effective date means a date when the file takes effect. The first effective date is a date when the first model log file takes effect, and the second effective date is a date when the second model log file takes effect. The latest effective date is the effective date closest to the current date. For example, it is assumed that the first user adjusts and modifies the building plan on February 1st, 2021 and the adjustment and modification take effect on February 15th, 2021; that is, the first effective date is February 15th, 2021; the second user adjusts and modifies the building plan on February 7th, 2021, and the adjustment and modification take effect on February 21st, 2021; that is, the second effective date is February 21st, 2021, and if the current date is February 9th, 2021, the first effective date is the latest effective date.

It should be noted that, a number of the users and a number of the model log files are not limited in the embodiment of the present disclosure; for example, only one or two or more users may be included; only one or two or more model log files may be included.

In the technical solution according to the embodiment of the present disclosure, by acquiring the imported building information model, converting the building information model into the original model file which meets the predetermined lightweight engine requirement, and displaying, in the webpage, the building plan corresponding to the original model file; receiving the first model log file uploaded by the first user and the second model log file uploaded by the second user, wherein the first model log file is obtained by the first user editing the building plan online, and the second model log file is obtained by the second user editing the building plan online; determining the latest effective date of the first effective date corresponding to the first model log file and the second effective date corresponding to the second model log file on the basis of the first effective date and the second effective date; and when it is determined that the first effective date is the latest effective date, updating the original model file on the basis of the first model log file to obtain the intermediate model file, and updating the intermediate model file on the basis of the second model log file to obtain the target model file, different users can simultaneously carry out online collaborative editing on the building plan on the webpage, thereby optimizing an editing process, improving an editing efficiency, shortening the adjustment and modification period, improving the plotting efficiency, reducing an error rate, saving the lot of manpower and time costs, and further improving user experiences.

In some embodiments, the acquiring an imported building information model, converting the building information model into an original model file which meets a predetermined lightweight engine requirement, and displaying, in a webpage, a building plan corresponding to the original model file includes: acquiring model data of the building information model, and converting the model data into the original model file by using a conversion plug-in, the original model file having a json suffix format; and importing the original model file into a lightweight engine, converting the original model file into the building plan by using the lightweight engine, and displaying the building plan in the webpage.

Specifically, the server acquires the model data of the building information model, and converts the model data into the original model file having a j son suffix format by using the conversion plug-in; further, the server imports the original model file into the lightweight engine, and converts the original model file into the building plan by using the lightweight engine to display the building plan in the webpage.

Here, the model data is created using various building information modeling technologies. The model data can be Revit model data, and the Revit model data is file data used by Revit software. Here, Revit is three-dimensional BIM design software (main file formats are .rvt, .rfa, .rte, or the like) which can be used to convert building standards into data for storage. It should be noted that the model data is not limited to the Revit model data described above, and may include file data of other kinds of engineering drawing software (for example, AutoCAD, CATIA, Pro/ENGINEER, SolidWorkss, or the like), for example. Preferably, in the embodiment of the present disclosure, the model data is Revit model data.

The plug-in is a program written in an application program interface according to a certain specification, and can only run under a system platform (possibly supporting multiple platforms simultaneously) specified by the program, and cannot run independently from the specified platform. The conversion plug-in may be a Revit plug-in. It should be noted that the Revit plug-in in the embodiment of the present disclosure is a secondary development plug-in. Here, secondary development means that customized modification is performed on existing software to extend functions, that is, to achieve desired functions; secondary development does not typically change a kernel of an original system.

In practical applications, the original model file can have a suffix of .json, and JavaScript Object Notation (JSON) format data is analyzed by using the lightweight engine. Here, JSON is a lightweight data exchange format which stores and represents data in a text format completely independent of a programming language based on a subset of ECMAScript. JSON has a simple and clear hierarchical structure, is easy to read and write by a user, and is also easy to analyze and generate by a machine, such that a network transmission efficiency is effectively improved. Furthermore, JOSN data analysis means that JSON format data is analyzed to obtain data values of different types. The JOSN data analyzing process can include: creating a JSON file, a document.h header file and a cocos-ext.h header file being included in a class; obtaining a JSON file path through FileUtils; and analyzing the JOSN format data through a Document object to obtain different types of data values.

According to the technical solution of the embodiment of the present disclosure, by performing lightweight processing on the model data by the secondary development Revit plug-in, the model data can be compressed and converted into the JSON format data which can be identified by the lightweight engine, such that the webpage can load and display the building plan generated based on the original model file, thereby realizing lightweight display and improving user experiences.

In some embodiments, the determining a latest effective date of a first effective date corresponding to the first model log file and a second effective date corresponding to the second model log file on the basis of the first effective date and the second effective date includes: acquiring the preset first effective date of the first model log file and the preset second effective date of the second model log file; and determining one of the first effective date and the second effective date closest to the current date as the latest effective date.

Specifically, after the building plan is edited online to obtain the first model log file, the first user may preset a date on which the first model log file is expected to take effect, i.e., the first effective date, and submit the first model log file and the first effective date to the server together; similarly, after the building plan is edited online to obtain the second model log file, the second user may preset a date on which the second model log file is expected to take effect, i.e., the second effective date, and submit the second model log file and the second effective date to the server together; further, the server compares the first effective date with the second effective date to determine an effective date closest to the current date, and takes the effective date closest to the current date as the latest effective date.

In some embodiments, the when it is determined that the first effective date is the latest effective date, updating the original model file on the basis of the first model log file to obtain an intermediate model file, and updating the intermediate model file on the basis of the second model log file to obtain a target model file includes: when it is determined that the first effective date is the latest effective date, acquiring first object data and first resource data in the first model log file, the first object data including a floor identity of a floor and a first operation type, and the first resource data including a first resource identity and first resource attribute data corresponding to the first operation type; executing an operation corresponding to the first operation type on the original model file, and combining the first model log file with the original model file based on the first resource identity and the first resource attribute data to generate the intermediate model file, the intermediate model file including a plurality of intermediate resource identities of a plurality of intermediate resources; acquiring second object data and second resource data in the second model log file, the second object data including a floor identity of a floor and a second operation type, and the second resource data including a second resource identity and second resource attribute data corresponding to the second operation type; and executing an operation corresponding to the second operation type on the intermediate model file, and combining the second model log file and the intermediate model file based on the second resource identity and the second resource attribute data to generate the target model file, the first operation type and the second operation type including an adding operation, a modifying operation or a deleting operation.

Specifically, when it is determined that the first effective date is the latest effective date, the server acquires the floor identity and the first operation type in the first model log file and the first resource identity and the first resource attribute data corresponding to the first operation type, and executes the operation corresponding to the first operation type on the original model file, so as to combine the first model log file and the original model file based on the first resource identity and the first resource attribute data to obtain the intermediate model file; further, the server acquires the floor identity and the second operation type in the second model log file and the second resource identity and the second resource attribute data corresponding to the second operation type, and executes the operation corresponding to the second operation type on the intermediate model file, so as to combine the second model log file and the intermediate model file based on the second resource identity and the second resource attribute data to obtain the target model file.

Here, the object refers to a region composed of resources, for example, the floor of the shopping mall. The object data may include the floor identity (ID) of the floor and the operation type. Here, the floor identity is a unique identity configured for the floor, and used for distinguishing different objects, so as to quickly and accurately find the objects. Further, the object identity may be a geographic position (for example, region B-1F, 1F, B-5F, or the like) where the object is located, or may be a name of the object (for example, first floor, third floor, tenth floor, fifteenth floor, or the like), which is not limited in the embodiment of the present disclosure. Preferably, in the embodiment of the present disclosure, the object identity is the geographic position where the object is located. The operation type may include, but is not limited to, any of the adding operation, the modifying operation, and the deleting operation.

The resource refers to a region in the building plan, and is a minimum unit constituting the object, for example, the shop of the shopping mall, i.e., an investment attracting resource. Specific types of the shops may include, but are not limited to, catering shops, entertainment shops, apparel shops, shopping shops, service shops, child shops, empty shops, or the like. The resource data may include the resource identity and the resource attribute data corresponding to the operation type. Here, the resource identity is a unique identity configured for the resource, and used for distinguishing different resources, so as to quickly and accurately find the resources. Further, the resource identity may be a geographic position (for example, building A-5F-D07, 1F036, 2F-18, or the like) where the resource is located or a name of the resource (for example, a shop name), which is not limited in the embodiment of the present disclosure. Preferably, in the embodiment of the present disclosure, the resource identity is the geographic position where the resource is located.

In some embodiments, the online collaborative editing method further includes: when it is determined that the operation of the original model file and the operation of the intermediate model file conflict, traversing the plurality of intermediate resource identities in the intermediate model file, so as to determine whether an intermediate resource identity matched with the second resource identity exists in the plurality of intermediate resource identities; and if the plurality of intermediate resource identities do not have the intermediate resource identity matched with the second resource identity, stopping updating of the intermediate model file, and sending conflict prompt information.

Specifically, when the operation of the original model file and the operation of the intermediate model file conflict, the server traverses the plurality of intermediate resource identities in the intermediate model file, so as to determine whether the intermediate resource identity matched with the second resource identity exists in the plurality of intermediate resource identities; and if the plurality of intermediate resource identities do not have the intermediate resource identity matched with the second resource identity, the server stops updating of the intermediate model file, and sends the conflict prompt information.

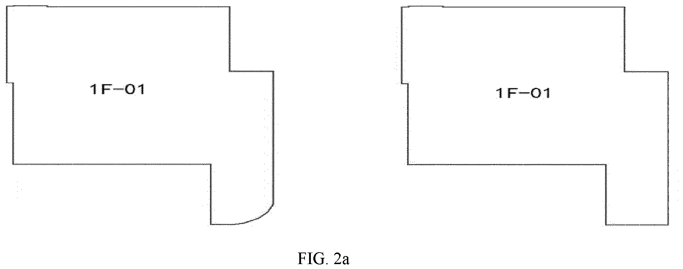

Here, as the conflict between the operation of the original model file and the operation of the intermediate model file, for example, the first user deletes the shop 1F-01 on June 5th, 2021, the second user modifies the shop 1F-01 on June 10th, 2021, and then, the modifying operation of the shop 1F-01 by the second user fails due to the deleting operation by the first user; in other words, the server cannot find the shop 1F-01 and further cannot modify the shop 1F-01; that is, the second resource identity corresponding to the shop 1F-01 does not exist in the intermediate model file. It should be noted that, when the conflict occurs, the server may prompt a reason for the combining failure and hand the combining failure over to a shop maintenance person for manual processing; at this point, the browser simultaneously displays the building plans corresponding to the different data causing the conflict, as shown in FIG. 2a; the left diagram in FIG. 2a is the operation of the shop 1F-01 by the first user, and the right diagram in FIG. 2a is the operation of the shop 1F-01 by the second user; further, the shop maintenance person may manually select one of them as an effective version.

The traversal means that all nodes in a tree (or graph) are accessed once in turn along a certain search route. The operation of accessing the node depends on a specific application problem, and the specific access operation may be checking of a value of the node, update of the value of the node, or the like. Orders of accessing the nodes are different in different traversal modes. In the embodiment of the present disclosure, the traversal means that the traversing operation is performed on all the intermediate resource identities on the same floor to determine whether the intermediate resource identities are matched with the second resource identity.

The form of the conflict prompt information may include, but is not limited to, voice type information, text type information, or the like. For example, when the conflict prompt information is voice type information, the conflict prompt information can be pushed to the user by means of voice broadcasting, and the conflict prompt information can be, for example, "the shop does not exist, please verify!", or, the conflict prompt information may be a preset buzzing prompt tone, for example, a warning sound; when the conflict prompt information is text type information, the conflict prompt information can be pushed to the user in a mode of popping up a floating window on the browser, and for example, the conflict prompt information can be "the shop does not exist and cannot be modified; if modification is required, please create the shop first!".

In some embodiments, the online collaborative editing method further includes: if the plurality of intermediate resource identities have the intermediate resource identity matched with the second resource identity, comparing the second resource attribute data with intermediate resource attribute data corresponding to the intermediate resource identity, and when the second resource attribute data is not completely consistent with the intermediate resource attribute data, stopping updating of the intermediate model file and sending the conflict prompt information, the second resource attribute data including a second resource identity, a second resource type, a second resource name, a second resource area and a second resource contour of a second resource, and the intermediate resource attribute data including the intermediate resource identity, an intermediate resource type, an intermediate resource name, an intermediate resource area and an intermediate resource contour of each of the plurality of intermediate resources.

Specifically, when the intermediate resource identity matched with the second resource identity exists in the plurality of intermediate resource identities, the server compares the second resource attribute data with the intermediate resource attribute data corresponding to the intermediate resource identities one by one to determine whether the second resource attribute data is completely consistent with the intermediate resource attribute data; if the second resource attribute data is not completely consistent with the intermediate resource attribute data, the server stops updating of the intermediate model file and sends the conflict prompt information; and if the second resource attribute data is completely consistent with the intermediate resource attribute data, the server combines the second model log file and the intermediate model file to generate the target model file.

Here, the resource attribute data refers to data of an editable region (for example, an available region of the shop) in the building plan , including but not limited to a resource identity, a resource type, a resource name, a resource area, a resource contour, or the like, of the resource. Further, the resource contour may include, but is not limited to, coordinates and identities of points, identities of edges, a type, a thickness, an alignment mode, start and end positions, identities of regions, the points, or the like. For example, the resource contour may be the coordinates of the points constituting the contour of the resource, and a contour line of the resource may be generated using a contour extraction algorithm based on the coordinates of the points.

It should be noted that if at least one piece of second resource attribute data is inconsistent with the corresponding intermediate resource attribute data, there are multiple adjustment and modification records for the same shop, and therefore, the conflict is generated.

In some embodiments, the online collaborative editing method further includes: when it is determined that the first effective date and the second effective date are both the latest effective date, acquiring a first uploading date of the first model log file and a second uploading date of the second model log file, and updating the original model file according to a sequence of the first uploading date and the second uploading date.

Specifically, if the first effective date and the second effective date are both the latest effective date, that is, the first effective date and the second effective date are the same, the server further acquires the first uploading date of the first model log file and the second uploading date of the second model log file, and determines the sequence of the first uploading date and the second uploading date; if the first uploading date is earlier than the second uploading date, the server updates the original model file based on the first model log file; if the first uploading date is later than the second uploading date, the server updates the original model file based on the second model log file.

In some embodiments, the online collaborative editing method further includes: when it is determined that the first uploading date and the second uploading date are the same, displaying a first building plan corresponding to the first model log file and a second building plan corresponding to the second model log file in the webpage, and updating the original model file based on the manually selected first building plan or second building plan.

Specifically, if the first effective date is the same as the second effective date, and the first uploading date is the same as the second uploading date, the first user and the second user adjust and modify the original model file at the same time, and the effective dates of the adjusted and modified first model log file and second model log file are the same; the server cannot determine the sequence of the first model log file and the second model log file, and therefore cannot update the original model file; at this point, the server displays the first building plan corresponding to the first model log file and the second building plan corresponding to the second model log file in the webpage, and notifies the shop maintenance person to manually select one of the first building plan and the second building plan to update the original model file.

All the above optional technical solutions may be combined arbitrarily to form optional embodiments of the present application, and are not repeated herein.

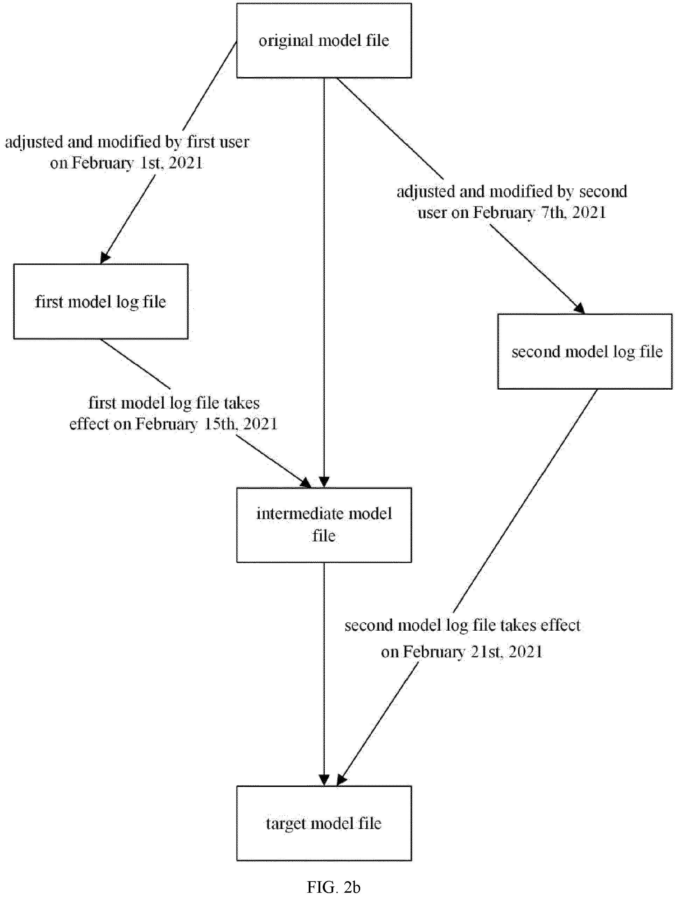

In the following, taking one floor of the shopping mall as an example, the above online collaborative editing method is described in detail by using an example, and a specific implementation process is shown in FIG. 2b.

Firstly, Revit model data is created based on a preconfigured Revit model, and the Revit model data is converted into an original model file which can be identified and loaded by a lightweight engine by using a conversion plug-in secondarily developed by Revit based on a family type in Revit; further, the original model file is stored as JSON format data which is as follows:

```
    {
         "height": 0,
         "name": "1F",
         "areas": [
            {
                 "id": "1F-01",
                 "type": "sub-anchor store",
                 "shop": "empty shop",
                 "area": 200.0,
                 "coordinates": [[[20000, 0], [40000, 0], [40000, 10000], [20000, 10000]]]
            },
            {
                 "id": "1F-02",
                 "type": "anchor store",
                 "shop": "MM",
                 "area": 200.0,
                 "coordinates": [[[50000, 0], [60000, 0], [60000, 10000], [50000, 10000]]]
            }
        ]
    }.
```

As can be seen from the above data, the JSON format data includes attribute data and a resource data set (areas), the attribute data includes a height (0) and a name (1F) of the floor, the resource data set includes first resource data and second resource data, the first resource data includes an identifier (1F-01), a type (sub-anchor store), a brand (empty shop), an area (200.0), and coordinates of points ([20000, 0], [ 40000, 0], [40000, 10000], [20000, 10000]) of the first resource, and the second resource data includes an identifier (1F-02), a type (anchor store), a brand (MM), an area (200.0), and coordinates of points ([ 50000, 0], [60000, 0], [60000, 10000], [50000, 10000]) of the second resource.

It should be noted that, only the data of two resources is shown here as an example, and in practical applications, data of multiple resources may be included in the JSON format data.

Next, a first user takes a model file copied from the original model file as a first model file to be adjusted and modified. The first user adjusts and modifies the first model file on February 1st, 2021, that is, adds a resource "1F-20", and uploads a log file of the adjusted and modified first model file (i.e., a first model log file) to the server, and meanwhile sets an effective date of the first model log file to February 15th, 2021, and JSON format data of the first model log file is as follows:

```
    [
        {
              "level": "1F",
              "type": "addition",
              "newID": "1F-20",
              "newData": {
                             "id": "1F-20",
                             "type": "exclusive store",
                             "shop": "empty shop",
                             "area": 100.0,
                             "coordinates": [[[0, 0], [10000, 0], [10000, 10000], [0, 10000]]]
                         }
        }
    ].
```

At this point, the JSON format data of the first model file of the first user is as follows:

```
    {
         "height": 0,
         "name": "1F",
         "areas": [
            {
                   "id": "1F-01",
                   "type": "sub-anchor store",
                   "shop": "empty shop",
                   "area": 200.0,
                   "coordinates": [[[20000, 0], [40000, 0], [40000, 10000], [20000, 10000]]]
              },
              {
                   "id": "1F-02",
                   "type": "anchor store",
                   "shop": "MM",
                   "area": 200.0,
                   "coordinates": [[[50000, 0], [60000, 0], [60000, 10000], [50000, 10000]]]
              },
              {
                   "id": "1F-20",
                   "type": "exclusive store",
                   "shop": "empty shop",
                   "area": 100.0,
                   "coordinates": [[[0, 0], [10000, 0], [10000, 10000], [0, 10000]]]
              }
           ]
    }.
```

It should be noted that, in order to facilitate combining of the first model file and the original model file, the first user may only upload the first model log file, such that the server can update the original model file based on the first model log file.

Further, a second user takes a model file copied from the original model file as a second model file to be adjusted and modified. The second user adjusts and modifies the second model file on February 7th, 2021, that is, deletes the resource "1F-01", and uploads a log file of the adjusted and modified second model file (i.e., a second model log file) to the server, and meanwhile sets an effective date of the second model log file to February 21st, 2021, and JSON format data of the second model log file is as follows:

```
    [
         {
              "level": "1F",
              "type": "deletion",
              "oldID": "1F-01",
              "oldData": {
                           "id": "1F-01",
                           "type": "sub-anchor store",
                           "shop": "empty shop",
                            "area": 200.0,
                            "coordinates": [[[20000, 0], [40000, 0], [40000, 10000], [20000,
                            10000]]]
               }
         }
    ].
```

At this point, the JSON format data of the second model file of the second user is as follows:

```
    {
         "height": 0,
         "name": "1F",
         "areas": [
              {
                   "id": "1F-02",
                   "type": "anchor store",
                   "shop": "MM",
                   "area": 200.0,
                   "coordinates": [[[50000, 0], [60000, 0],
[60000, 10000], [50000, 10000]]]
              },
          ]
    }.
```

Finally, the server updates the original model file based on the first model log file on February 15th, 2021 to obtain an intermediate model file; that is, "1F-20" is added on the basis of the original model file, and JSON format data of the intermediate model file is as follows:

```
    {
         "height": 0,
         "name": "1F",
         "areas": [
              {
                   "id": "1F-01",
                   "type": "sub-anchor store",
                   "shop": "empty shop",
                   "area": 200.0,
                   "coordinates": [[[20000, 0], [40000, 0], [40000, 10000], [20000, 10000]]]
                 },
                 {
                   "id": "1F-02",
                   "type": "anchor store",
                   "shop": "MM",
                   "area": 200.0,
                   "coordinates": [[[50000, 0], [60000, 0], [60000, 10000], [50000, 10000]]]
                 },
                 {
                   "id": "1F-20",
                   "type": "exclusive store",
                   "shop": "empty shop",
                   "area": 100.0,
                   "coordinates": [[[0, 0], [10000, 0], [10000, 10000], [0, 10000]]]
                 }
         ]
    }.
```

Further, the server updates the intermediate model file based on the second model log file on February 21st, 2021 to obtain a target model file; that is, "1F-01" is deleted on the basis of the intermediate model file, and JSON format data of the target model file is as follows:

```
    {
         "height": 0,
         "name": "1F",
         "areas": [
              {
                   "id": "1F-02",
                   "type": "anchor store",
                   "shop": "MM",
                   "area": 200.0,
                   "coordinates": [[[50000, 0], [60000, 0], [60000, 10000], [50000, 10000]]]
                 },
                 {
                   "id": "1F-20",
                   "type": "exclusive store",
                   "shop": "empty shop",
                   "area": 100.0,
                   "coordinates": [[[0, 0], [10000, 0], [10000, 10000], [0, 10000]]]
                 }
            ]
    }.
```

An apparatus according to the embodiments of the present disclosure is described below, and may be configured to perform the method according to the embodiments of the present disclosure. For details not disclosed in the embodiments of the apparatus according to the present disclosure, reference is made to the embodiments of the method according to the present disclosure.

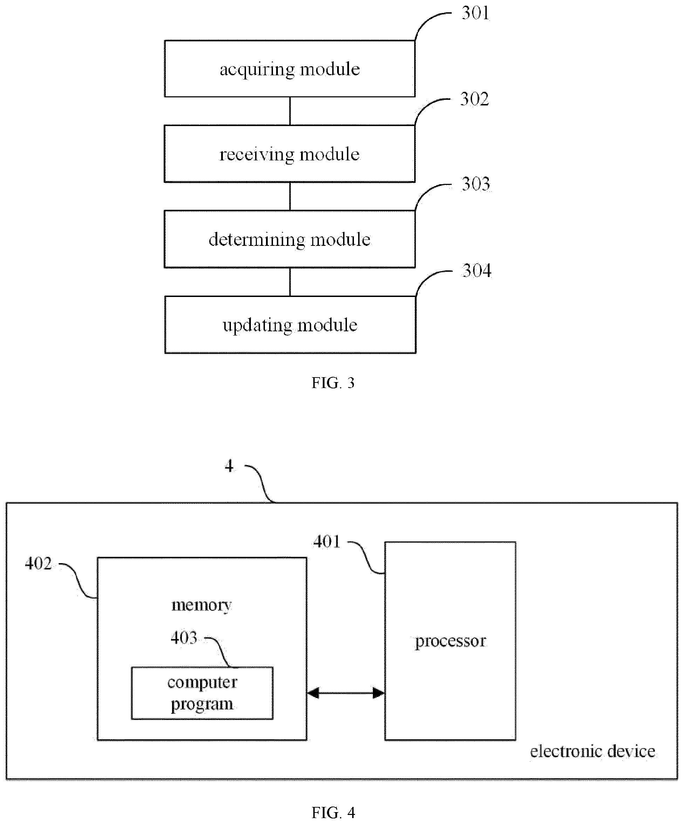

FIG. 3 is a schematic structural diagram of an online collaborative editing apparatus according to an embodiment of the present disclosure. As shown in FIG. 3, the online collaborative editing apparatus includes:
an acquiring module 301 configured to acquire an imported building information model, convert the building information model into an original model file which meets a predetermined lightweight engine requirement, and display, in a webpage, a building plan corresponding to the original model file;
a receiving module 302 configured to receive a first model log file uploaded by a first user and a second model log file uploaded by a second user, wherein the first model log file is obtained by the first user editing the building plan online, and the second model log file is obtained by the second user editing the building plan online;
a determining module 303 configured to determine a latest effective date of a first effective date corresponding to the first model log file and a second effective date corresponding to the second model log file on the basis of the first effective date and the second effective date; and
an updating module 304 configured to, when it is determined that the first effective date is the latest effective date, update the original model file on the basis of the first model log file to obtain an intermediate model file, and update the intermediate model file on the basis of the second model log file to obtain a target model file.

In the technical solution according to the embodiment of the present disclosure, by acquiring the imported building information model, converting the building information model into the original model file which meets the predetermined lightweight engine requirement, and displaying, in the webpage, the building plan corresponding to the original model file; receiving the first model log file uploaded by the first user and the second model log file uploaded by the second user, wherein the first model log file is obtained by the first user editing the building plan online, and the second model log file is obtained by the second user editing the building plan online; determining the latest effective date of the first effective date corresponding to the first model log file and the second effective date corresponding to the second model log file on the basis of the first effective date and the second effective date; and when it is determined that the first effective date is the latest effective date, updating the original model file on the basis of the first model log file to obtain the intermediate model file, and updating the intermediate model file on the basis of the second model log file to obtain the target model file, different users can simultaneously carry out online collaborative editing on the building plan on the webpage, thereby optimizing an editing process, improving an editing efficiency, shortening the adjustment and modification period, improving the plotting efficiency, reducing an error rate, saving the lot of manpower and time costs, and further improving user experiences.

In some embodiments, the acquiring module 301 of FIG. 3 acquires model data of the building information model, and converts the model data into the original model file by using a conversion plug-in, the original model file having a json suffix format; and imports the original model file into a lightweight engine, converts the original model file into the building plan by using the lightweight engine, and displays the building plan in the webpage.

In some embodiments, the determining module 303 of FIG. 3 acquires the preset first effective date of the first model log file and the preset second effective date of the second model log file; and determines one of the first effective date and the second effective date closest to the current date as the latest effective date.

In some embodiments, when it is determined that the first effective date is the latest effective date, the updating module 304 of FIG. 3 acquires first object data and first resource data in the first model log file, the first object data including a floor identity of a floor and a first operation type, and the first resource data including a first resource identity and first resource attribute data corresponding to the first operation type; executes an operation corresponding to the first operation type on the original model file, and combines the first model log file with the original model file based on the first resource identity and the first resource attribute data to generate the intermediate model file, the intermediate model file including a plurality of intermediate resource identities of a plurality of intermediate resources; acquires second object data and second resource data in the second model log file, the second object data including a floor identity of a floor and a second operation type, and the second resource data including a second resource identity and second resource attribute data corresponding to the second operation type; and executes an operation corresponding to the second operation type on the intermediate model file, and combines the second model log file and the intermediate model file based on the second resource identity and the second resource attribute data to generate the target model file, the first operation type and the second operation type including an adding operation, a modifying operation or a deleting operation.

In some embodiments, when it is determined that the operation of the original model file and the operation of the intermediate model file conflict, the updating module 304 of FIG. 3 traverses the plurality of intermediate resource identities in the intermediate model file, so as to determine whether an intermediate resource identity matched with the second resource identity exists in the plurality of intermediate resource identities; and if the plurality of intermediate resource identities do not have the intermediate resource identity matched with the second resource identity, stops updating of the intermediate model file, and sends conflict prompt information.

In some embodiments, if the plurality of intermediate resource identities have the intermediate resource identity matched with the second resource identity, the updating module 304 of FIG. 3 compares the second resource attribute data with intermediate resource attribute data corresponding to the intermediate resource identity, and when the second resource attribute data is not completely consistent with the intermediate resource attribute data, stops updating of the intermediate model file and sends the conflict prompt information, the second resource attribute data including a second resource identity, a second resource type, a second resource name, a second resource area and a second resource contour of a second resource, and the intermediate resource attribute data including the intermediate resource identity, an intermediate resource type, an intermediate resource name, an intermediate resource area and an intermediate resource contour of each of the plurality of intermediate resources.

In some embodiments, when it is determined that the first effective date and the second effective date are both the latest effective date, the updating module 304 of FIG. 3 acquires a first uploading date of the first model log file and a second uploading date of the second model log file, and updates the original model file according to a sequence of the first uploading date and the second uploading date.

In some embodiments, when it is determined that the first uploading date and the second uploading date are the same, the updating module 304 of FIG. 3 displays a first building plan corresponding to the first model log file and a second building plan corresponding to the second model log file in the webpage, and updates the original model file based on the manually selected first building plan or second building plan.

In some embodiments, the building information model is a Revit model.

It should be understood that, the sequence numbers of the steps in the foregoing embodiments do not imply an execution sequence, and the execution sequence of each process should be determined by functions and internal logic of the process, and should not constitute any limitation to the implementation process of the embodiments of the present disclosure.

FIG. 4 is a schematic structural diagram of an electronic device 4 according to the present invention. As shown in FIG. 4, the electronic device 4 according to the present embodiment includes: a processor 401, a memory 402, and a computer program 403 stored in the memory 402 and executable on the processor 401. The steps in the various method embodiments described above are implemented when the processor 401 executes the computer program 403. Alternatively, the processor 401 achieves the functions of each module/unit in each apparatus embodiment described above when executing the computer program 403.

Exemplarily, the computer program 403 may be partitioned into one or more modules/units, which are stored in the memory 402 and executed by the processor 401 to complete the present invention. One or more of the modules/units may be a series of computer program instruction segments capable of performing specific functions, the instruction segments describing the execution of the computer program 403 in the electronic device 4.

The electronic device 4 may be a desktop computer, a notebook, a palm computer, a cloud server or another electronic device. The electronic device 4 may include, but is not limited to, the processor 401 and the memory 402. Those skilled in the art may understand that a structure shown in FIG. 4 is only an example of the electronic device 4 and does not limit the electronic device 4, which may include more or fewer components than those shown in the drawings, or some components may be combined, or a different component deployment may be used. For example, the electronic device may further include an input/output device, a network access device, a bus, or the like.

The processor 401 may be a Central Processing Unit (CPU), or other general-purpose processors, Digital Signal Processors (DSP), Application Specific Integrated Circuits (ASIC), Field-Programmable Gate Arrays (FPGA) or other programmable logic devices, discrete gates or transistor logic devices, discrete hardware components, etc. The general-purpose processor may be a microprocessor or the processor may be any general processor, or the like.

The memory 402 may be an internal storage unit of the electronic device 4, for example, a hard disk or memory of the electronic device 4. The memory 402 may also be an external storage device of the electronic device 4, such as a plug-in hard disk, a Smart Media Card (SMC), a Secure Digital (SD) Card, a Flash Card, or the like, configured on the electronic device 4. Further, the memory 402 may also include both the internal storage unit and the external storage device of the electronic device 4. The memory 402 is configured to store the computer program and other programs and data required by the electronic device. The memory 402 may be further configured to temporarily store data which has been or will be outputted.

It may be clearly understood by those skilled in the art that, for convenient and brief description, division of the above functional units and modules is used as an example for illustration. In practical application, the above functions can be allocated to different functional units and modules and implemented as required; that is, an internal structure of the apparatus is divided into different functional units or modules to accomplish all or some of the functions described above. The functional units or modules in the embodiments may be integrated into one processing unit, or each of the units may exist alone physically, or two or more units are integrated into one unit, and the integrated unit may be implemented in a form of hardware, or may also be implemented in a form of a software functional unit. In addition, specific names of all the functional units or modules are merely for facilitating the differentiation, but are not intended to limit the protection scope of this application. For a specific working process of the units or modules in the above system, reference may be made to the corresponding process in the foregoing method embodiments, which is not repeated herein.

In the above embodiments, the description of each embodiment has its own emphasis. For a part not described in detail in one embodiment, reference may be made to relevant description of other embodiments.

Those of ordinary skill in the art would appreciate that the units and algorithmic steps of the examples described in combination with the embodiments disclosed herein can be implemented by electronic hardware or a combination of computer software and electronic hardware. Whether these functions are performed by hardware or software depends on a specific application and design constraints of the technical solution. Technical professionals may achieve the described functions in different methods for each particular application, but such implementation should not be considered beyond the scope of the present invention.

In the embodiments according to the present invention, it is to be understood that the disclosed apparatus/electronic device and method can be implemented in other ways. For example, the embodiment of the apparatus/electronic device described above is merely schematic. For example, the division of the modules or units is merely logical function division, and there may be other division manners in an actual implementation. For example, a plurality of units or components may be combined or integrated into another system, or some features may be ignored or not performed. In addition, the displayed or discussed mutual coupling or direct coupling or communication connection may be implemented by using some interfaces. The indirect coupling or communication connection between apparatuses or units may be implemented in an electric form, a mechanical form, or other forms.

The units described as separate parts may or may not be physically separate, and parts displayed as units may or may not be physical units, may be located at one position, or may be distributed on a plurality of network units. Some or all of the units may be selected according to actual needs to achieve the objectives of the solutions of the embodiments.

In addition, the functional units in the embodiments of the present invention may be integrated into one processing unit, or each of the units may exist alone physically, or two or more units are integrated into one unit. The integrated unit may be implemented in a form of hardware or in a form of a software functional unit.

The integrated module/unit may be stored in a computer-readable storage medium when implemented in the form of the software functional unit and sold or used as a separate product. Based on such understanding, all or some of the processes in the method according to the above embodiments may be realized in the present invention, or completed by the computer program instructing related hardware, the computer program may be stored in the computer-readable storage medium, and when the computer program is executed by the processor, the steps of the above method embodiments may be realized. The computer program may include a computer program code, which may be in a form of a source code, an object code or an executable file or in some intermediate forms. The computer-readable medium may include any entity or apparatus capable of carrying the computer program code, a recording medium, a USB flash drive, a removable hard disk, a magnetic disk, an optical disk, a computer memory, a Read-Only Memory (ROM), a Random Access Memory (RAM), an electrical carrier signal, a telecommunication signal, a software distribution medium, and so on. It should be noted that content included in the computer-readable medium may be appropriately increased or decreased according to requirements of legislation and patent practice in a jurisdiction, for example, in some jurisdictions, according to legislation and patent practice, the computer-readable medium does not include the electrical carrier signal and the telecommunication signal.

The above embodiments are merely intended to describe the technical solutions of the present disclosure, but not to limit the present disclosure. Although the present disclosure is described in detail with reference to the foregoing embodiments, those of ordinary skill in the art should understand that they may still make modifications to the technical solutions described in the foregoing embodiments or make equivalent replacements to some technical features thereof. Such modifications or replacements do not cause the essence of the corresponding technical solutions to depart from the spirit and scope of the technical solutions of the embodiments of the present disclosure, and should be included in the protection scope of the present disclosure.

## Claims

1. An online collaborative editing method, comprising:
acquiring an imported building information model, converting the building information model into an original model file which meets a predetermined lightweight engine requirement, and displaying, in a webpage, a building plan corresponding to the original model file;
receiving a first model log file uploaded by a first user and a second model log file uploaded by a second user, wherein the first model log file is obtained by the first user editing the building plan online, and the second model log file is obtained by the second user editing the building plan online;
determining a latest effective date of a first effective date corresponding to the first model log file and a second effective date corresponding to the second model log file on the basis of the first effective date and the second effective date; and
when it is determined that the first effective date is the latest effective date, updating the original model file on the basis of the first model log file to obtain an intermediate model file, and updating the intermediate model file on the basis of the second model log file to obtain a target model file.

2. The method according to claim 1, wherein the acquiring an imported building information model, converting the building information model into an original model file which meets a predetermined lightweight engine requirement, and displaying, in a webpage, a building plan corresponding to the original model file comprises:
acquiring model data of the building information model, and converting the model data into the original model file by using a conversion plug-in, the original model file having a json suffix format; and
importing the original model file into a lightweight engine, converting the original model file into the building plan by using the lightweight engine, and displaying the building plan in the webpage.

3. The method according to claim 1, wherein the determining a latest effective date of a first effective date corresponding to the first model log file and a second effective date corresponding to the second model log file on the basis of the first effective date and the second effective date comprises:
acquiring the preset first effective date of the first model log file and the preset second effective date of the second model log file; and
determining one of the first effective date and the second effective date closest to the current date as the latest effective date.

4. The method according to claim 1, wherein the when it is determined that the first effective date is the latest effective date, updating the original model file on the basis of the first model log file to obtain an intermediate model file, and updating the intermediate model file on the basis of the second model log file to obtain a target model file comprises:
when it is determined that the first effective date is the latest effective date, acquiring first object data and first resource data in the first model log file, the first object data comprising a floor identity of a floor and a first operation type, and the first resource data comprising a first resource identity and first resource attribute data corresponding to the first operation type;
executing an operation corresponding to the first operation type on the original model file, and combining the first model log file with the original model file based on the first resource identity and the first resource attribute data to generate the intermediate model file, the intermediate model file comprising a plurality of intermediate resource identities of a plurality of intermediate resources;
acquiring second object data and second resource data in the second model log file, the second object data comprising a floor identity of a floor and a second operation type, and the second resource data comprising a second resource identity and second resource attribute data corresponding to the second operation type; and
executing an operation corresponding to the second operation type on the intermediate model file, and combining the second model log file and the intermediate model file based on the second resource identity and the second resource attribute data to generate the target model file,
the first operation type and the second operation type comprising an adding operation, a modifying operation or a deleting operation.

5. The method according to claim 4, further comprising:
when it is determined that the operation of the original model file and the operation of the intermediate model file conflict, traversing the plurality of intermediate resource identities in the intermediate model file, so as to determine whether an intermediate resource identity matched with the second resource identity exists in the plurality of intermediate resource identities; and
if the plurality of intermediate resource identities do not have the intermediate resource identity matched with the second resource identity, stopping updating of the intermediate model file, and sending conflict prompt information.

6. The method according to claim 5, further comprising:
if the plurality of intermediate resource identities have the intermediate resource identity matched with the second resource identity, comparing the second resource attribute data with intermediate resource attribute data corresponding to the intermediate resource identity, and when the second resource attribute data is not completely consistent with the intermediate resource attribute data, stopping updating of the intermediate model file and sending the conflict prompt information,
the second resource attribute data comprising a second resource identity, a second resource type, a second resource name, a second resource area and a second resource contour of a second resource, and the intermediate resource attribute data comprising the intermediate resource identity, an intermediate resource type, an intermediate resource name, an intermediate resource area and an intermediate resource contour of each of the plurality of intermediate resources.

7. The method according to claim 1, further comprising:
when it is determined that the first effective date and the second effective date are both the latest effective date, acquiring a first uploading date of the first model log file and a second uploading date of the second model log file, and updating the original model file according to a sequence of the first uploading date and the second uploading date.

8. The method according to claim 7, further comprising:
when it is determined that the first uploading date and the second uploading date are the same, displaying a first building plan corresponding to the first model log file and a second building plan corresponding to the second model log file in the webpage, and updating the original model file based on the manually selected first building plan or second building plan.

9. The method according to claim 1, wherein the building information model is a Revit model.

10. An online collaborative editing apparatus, comprising:
an acquiring module configured to acquire an imported building information model, convert the building information model into an original model file which meets a predetermined lightweight engine requirement, and display, in a webpage, a building plan corresponding to the original model file;
a receiving module configured to receive a first model log file uploaded by a first user and a second model log file uploaded by a second user, wherein the first model log file is obtained by the first user editing the building plan online, and the second model log file is obtained by the second user editing the building plan online;
a determining module configured to determine a latest effective date of a first effective date corresponding to the first model log file and a second effective date corresponding to the second model log file on the basis of the first effective date and the second effective date; and
an updating module configured to, when it is determined that the first effective date is the latest effective date, update the original model file on the basis of the first model log file to obtain an intermediate model file, and update the intermediate model file on the basis of the second model log file to obtain a target model file.

11. An electronic device, comprising a memory, a processor and a computer program stored in the memory and runnable on the processor, wherein the processor, when executing the computer program, implements the steps of the method according to claim 1.

12. A computer-readable storage medium storing a computer program, wherein the computer program, when executed by a processor, implements the steps of the method according to claim 1.
